(19) Europäisches Patentamt
European Patent Office
Office européen des brevets

(11) **EP 4 282 829 A1**

(12) **EUROPEAN PATENT APPLICATION**
published in accordance with Art. 153(4) EPC

(43) Date of publication:
**29.11.2023 Bulletin 2023/48**

(21) Application number: **22899063.6**

(22) Date of filing: **24.11.2022**

(51) International Patent Classification (IPC):
**C01G 53/00** (2006.01)   **H01M 4/525** (2010.01)
**H01M 4/505** (2010.01)   **H01M 10/052** (2010.01)

(52) Cooperative Patent Classification (CPC):
**C01G 53/00; H01M 4/02; H01M 4/505;
H01M 4/525; H01M 10/052;** Y02E 60/10

(86) International application number:
**PCT/KR2022/018741**

(87) International publication number:
**WO 2023/096381 (01.06.2023 Gazette 2023/22)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **24.11.2021 KR 20210163379**

(71) Applicant: **Lg Chem, Ltd.**
**Seoul 07336 (KR)**

(72) Inventors:
• **YOU, Min Kyu**
 **Daejeon 34122 (KR)**

• **SHIN, Sun Sik**
 **Daejeon 34122 (KR)**
• **JIN, Joo Hong**
 **Daejeon 34122 (KR)**
• **LEE, June Woo**
 **Daejeon 34122 (KR)**
• **SHIN, Ji A**
 **Daejeon 34122 (KR)**
• **PARK, Min Joo**
 **Daejeon 34122 (KR)**

(74) Representative: **Hoffmann Eitle
Patent- und Rechtsanwälte PartmbB
Arabellastraße 30
81925 München (DE)**

(54) **METHOD FOR MANUFACTURING POSITIVE ELECTRODE ACTIVE MATERIAL FOR LITHIUM SECONDARY BATTERY, POSITIVE ELECTRODE ACTIVE MATERIAL FOR LITHIUM SECONDARY BATTERY, POSITIVE ELECTRODE COMPRISING SAME FOR LITHIUM SECONDARY BATTERY, AND LITHIUM SECONDARY BATTERY**

(57)    The present invention relates to a method of preparing a positive electrode active material having a high ratio of charge and discharge capacity at a charge end voltage of 4.1 V to 4.175 V to charge and discharge capacity at a charge end voltage of 4.2 V to 4.275 V and an excellent initial charge and discharge capacity.

[FIG. 1]

EP 4 282 829 A1

**Description**

**TECHNICAL FIELD**

Cross-reference to Related Applications

This application claims priority from Korean Patent Application No. 10-2021-0163379, filed on November 24, 2021, the disclosure of which is incorporated by reference herein.

Technical Field

The present invention relates to a method of preparing a positive electrode active material which is for preparing a secondary battery exhibiting excellent charge and discharge capacities in a wide range of charge end voltages.

**BACKGROUND ART**

Demand for secondary batteries as an energy source has been significantly increased as technology development and demand with respect to mobile devices have increased. Among these secondary batteries, lithium secondary batteries having high energy density, high voltage, long cycle life, and low self-discharging rate have been commercialized and widely used.

Lithium transition metal oxides have been used as a positive electrode active material of the lithium secondary battery, and, among these oxides, a lithium cobalt composite metal oxide, such as $LiCoO_2$, having a high operating voltage and excellent capacity characteristics has been mainly used. However, since the $LiCoO_2$ has very poor thermal properties due to an unstable crystal structure caused by delithiation and is expensive, there is a limitation in using a large amount of the $LiCoO_2$ as a power source for applications such as electric vehicles.

Lithium manganese composite metal oxides ($LiMnO_2$, $LiMn_2O_4$, etc.), lithium iron phosphate compounds ($LiFePO_4$, etc.), or lithium nickel composite metal oxides ($LiNiO_2$, etc.) have been developed as materials for replacing the $LiCoO_2$. Among these materials, research and development of the lithium nickel composite metal oxides, in which a large capacity battery may be easily achieved due to a high reversible capacity of about 200 mAh/g, have been more actively conducted. However, the $LiNiO_2$ has limitations in that the $LiNiO_2$ has poorer thermal stability than the $LiCoO_2$ and, when an internal short circuit occurs in a charged state due to an external pressure, the positive electrode active material itself is decomposed to cause rupture and ignition of the battery.

Accordingly, as a method to improve low thermal stability while maintaining the excellent reversible capacity of the $LiNiO_2$, a nickel cobalt manganese-based lithium composite metal oxide (hereinafter, simply referred to as 'NCM-based lithium oxide'), in which a portion of nickel (Ni) is substituted with manganese (Mn) and cobalt (Co), has been developed. However, since capacity characteristics of conventional NCM-based lithium oxides developed to date are insufficient, the NCM-based lithium oxides have been limited in application.

As described above, positive electrode active materials for lithium secondary batteries, which include various coating layers for improving battery characteristics, have been provided in the related arts.

In a case in which the same secondary battery is used for both an energy storage system (SS) and an electric vehicle (EV), 4.2 V or 4.1 V is typically used as a charge end voltage. Thus, in order to be used in various applications, 4.2 V capacity and 4.1 V capacity must be achieved equally well, and, in a case in which the 4.1 V capacity is low even if the 4.2 V capacity is high, there is a limitation in that the secondary battery is difficult to be used in both the energy storage system and the electric vehicle.

[Prior Art Document]

[Patent Document]

(Patent Document 1) Japanese Patent Application Laid-open Publication No. 2021-012807

**DISCLOSURE OF THE INVENTION**

**TECHNICAL PROBLEM**

An aspect of the present invention provides a method of preparing a positive electrode active material having a high ratio of charge and discharge capacity at a charge end voltage of 4.1 V to 4.175 V to charge and discharge capacity at a charge end voltage of 4.2 V to 4.275 V and an excellent initial charge and discharge capacity.

**TECHNICAL SOLUTION**

According to an aspect of the present invention, there is provided a method of preparing a positive electrode active material which includes steps of: (S1) preparing a positive electrode active material precursor including nickel, cobalt, and manganese; (S2) mixing the positive electrode active material precursor and a lithium source and sintering the mixture to form a lithium transition metal oxide; and (S3) washing the lithium transition metal oxide with a washing solution, wherein the sintering is performed in an atmosphere with an oxygen concentration of 85% or more, a molar ratio (Li/M) of lithium (Li) of the lithium source to total metallic elements (M) of the positive electrode active material precursor is in a range of 1.03 to 1.05, and the washing solution is used in an amount of 50 parts by weight to 110 parts by weight based on 100 parts by weight of the lithium transition metal oxide.

According to another aspect of the present invention, there is provided a positive electrode active material including nickel, cobalt, and manganese, wherein an amount of the nickel among total metallic elements is 60 mol% or more, and a value calculated by Equation 1 is in a range of 90% to 100%.

$$[\text{Equation 1}]$$

$$(\text{first discharge capacity})/(\text{second discharge capacity}) \times 100$$

In Equation 1,

the first discharge capacity is measured by charging at a constant current of 0.2 C to a first charge end voltage in a constant current/constant voltage (CC/CV) mode and discharging at a constant current of 0.2 C to 2.5 V in a CC mode, and

the second discharge capacity is measured by charging at a constant current of 0.2 C to a second charge end voltage in a CC/CV mode and discharging at a constant current of 0.2 C to 2.5 V in a CC mode,

wherein, the first charge end voltage is in a range of 4.1 V to 4.175 V, and the second charge end voltage is in a range of 4.2 V to 4.275 V.

According to another aspect of the present invention, there is provided a positive electrode for a lithium secondary battery which includes the positive electrode active material.

**ADVANTAGEOUS EFFECTS**

Since a positive electrode active material prepared according to a preparation method of the present invention exhibits both excellent charge and discharge capacity when a charge end voltage is in a range of 4.2 V to 4.275 V and excellent charge and discharge capacity when the charge end voltage is in a range of 4.1 V to 4.175 V, it may be used in various applications such as an energy storage system and an electric vehicle.

**BRIEF DESCRIPTION OF THE DRAWINGS**

FIG. 1 illustrates a ratio of charge capacity at a charge end voltage of 4.175 V to charge capacity at a charge end voltage of 4.25 V in Examples 1 to 5 and Comparative Examples 1 and 2.

FIG. 2 illustrates a ratio of discharge capacity at a charge end voltage of 4.175 V to discharge capacity at a charge end voltage of 4.25 V in Examples 1 to 5 and Comparative Examples 1 and 2.

FIG. 3 illustrates a ratio of charge capacity at a charge end voltage of 4.175 V to charge capacity at a charge end voltage of 4.25 V in Examples 6 to 9 and Comparative Example 3.

FIG. 4 illustrates a ratio of discharge capacity at a charge end voltage of 4.175 V to discharge capacity at a charge end voltage of 4.25 V in Examples 6 to 9 and Comparative Example 3.

FIG. 5 is a graph illustrating a change in dQ/dV according to Li/M.

FIG. 6 is a graph illustrating DCIRs for each SOC of Example 3 and Comparative Example 1.

FIG. 7 is a graph illustrating capacity retentions (%) at 20°C of Example 3 and Comparative Example 1.

FIG. 8 is a graph illustrating capacity retentions (%) at 40°C of Example 3 and Comparative Example 1.

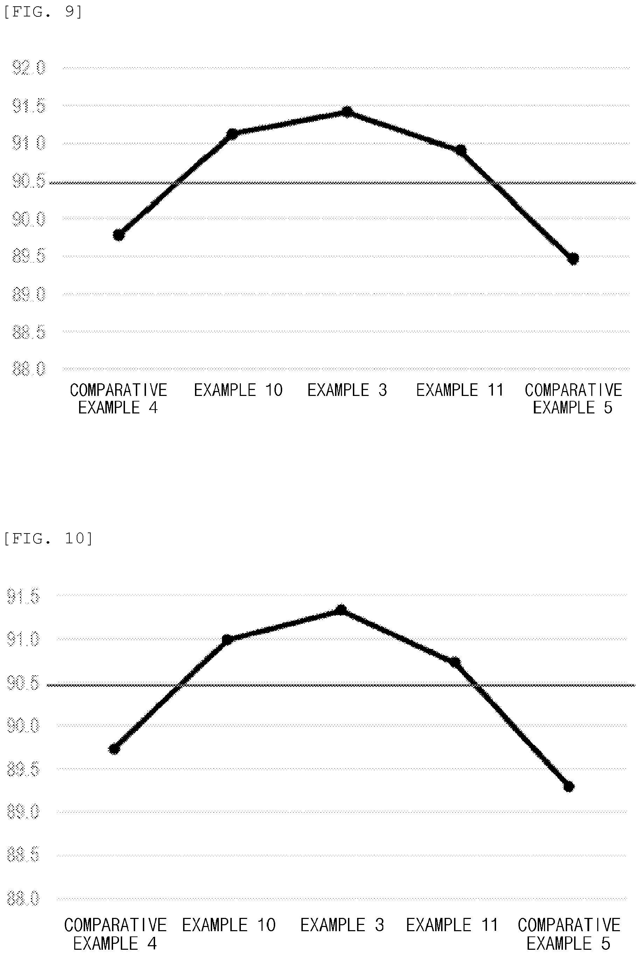

FIG. 9 illustrates a ratio of charge capacity at a charge end voltage of 4.175 V to charge capacity at a charge end voltage of 4.25 V in Examples 3, 10, and 11 and Comparative Examples 4 and 5.

FIG. 10 illustrates a ratio of discharge capacity at a charge end voltage of 4.175 V to discharge capacity at a charge end voltage of 4.25 V in Examples 3, 10, and 11 and Comparative Examples 4 and 5.

## MODE FOR CARRYING OUT THE INVENTION

Hereinafter, the present invention will be described in more detail to allow for a clearer understanding of the present invention.

It will be understood that words or terms used in the specification and claims shall not be interpreted as the meaning defined in commonly used dictionaries, and it will be further understood that the words or terms should be interpreted as having a meaning that is consistent with their meaning in the context of the relevant art and the technical idea of the invention, based on the principle that an inventor may properly define the meaning of the words or terms to best explain the invention.

### <Method of Preparing Positive Electrode Active Material>

A method of preparing a positive electrode active material of the present invention is characterized in that the method includes the steps of: (S1) preparing a positive electrode active material precursor including nickel, cobalt, and manganese; (S2) mixing the positive electrode active material precursor and a lithium source and sintering the mixture to form a lithium transition metal oxide; and (S3) washing the lithium transition metal oxide with a washing solution, wherein the sintering is performed in an atmosphere with an oxygen concentration of 85% or more, a molar ratio (Li/M) of lithium (Li) of the lithium source to total metallic elements (M) of the positive electrode active material precursor is in a range of 1.03 to 1.05, and the washing solution is used in an amount of 50 parts by weight to 110 parts by weight based on 100 parts by weight of the lithium transition metal oxide.

In the present invention, in the step of mixing the positive electrode active material precursor and the lithium source and then sintering the mixture, since charge and discharge capacities were excellent under both conditions of a charge end voltage of 4.2 to 4.275 V and a charge end voltage of 4.1 V to 4.175 V when used in a secondary battery by limiting an oxygen concentration condition of the air atmosphere, simultaneously limiting the molar ratio (Li/M) of the lithium (Li) of the lithium source to the total metallic elements (M) of the positive electrode active material precursor to a numerical range of 1.03 to 1.05, and simultaneously adjusting the amount of the washing solution to an appropriate range during washing, a positive electrode active material having a high ratio of charge and discharge capacity at a charge end voltage of 4.1 V to 4.175 V to charge and discharge capacity at a charge end voltage of 4.2 V to 4.275 V was prepared.

Hereinafter, each step will be described in detail.

### Step (S1)

A positive electrode active material precursor including nickel, cobalt, and manganese is prepared.

The positive electrode active material precursor may be a high-nickel (high-Ni) positive electrode active material precursor in which an amount of nickel (Ni) among total metallic elements is 60 mol% or more, and the amount of the nickel (Ni) among the total metallic elements may be 80 mol% or more. A lithium transition metal oxide, which is formed by using the high-nickel (high-Ni) positive electrode active material precursor having the amount of the nickel (Ni) among the total metallic elements of 60 mol% or more as described above, may ensure high capacity.

The positive electrode active material precursor used in the present invention may be an NCM-based compound containing nickel (Ni), cobalt (Co), and manganese (Mn), or may be an NCA-based compound containing nickel (Ni), cobalt (Co), and aluminum (Al), and may be a four-component positive electrode active material precursor essentially including four components of nickel (Ni), cobalt (Co), manganese (Mn), and aluminum (Al).

In terms of capacity, efficiency, and life characteristics, the NCM-based compound containing nickel (Ni), cobalt (Co), and manganese (Mn) or the four-component positive electrode active material precursor essentially including four components of nickel (Ni), cobalt (Co), manganese (Mn), and aluminum (Al) may be more preferable. In a case in which a positive electrode active material is prepared from the four-component positive electrode active material precursor, stability of the positive electrode active material may be improved, and lifetime may be improved without degrading output characteristics and capacity characteristics in comparison to NCM/NCA positive electrode active materials.

### Step (S2)

The positive electrode active material precursor and a lithium source are mixed and sintered to form a lithium transition metal oxide.

Herein, a molar ratio (Li/M) of lithium (Li) of the lithium source to total metallic elements (M) of the positive electrode active material precursor may be in a range of 1.03 to 1.05, preferably, 1.035 to 1.045, or 1.037 to 1.043.

Conventionally, the molar ratio (Li/M) of the lithium (Li) of the lithium source to the total metallic elements (M) of the positive electrode active material precursor was generally in a range of about 1.0 to about 1.1, wherein, in this case, since there was a problem in that capacity at a charge end voltage of 4.1 V to 4.175 V was relatively lower than capacity at a charge end voltage of 4.2 V to 4.275 V, it was difficult to use it in various applications.

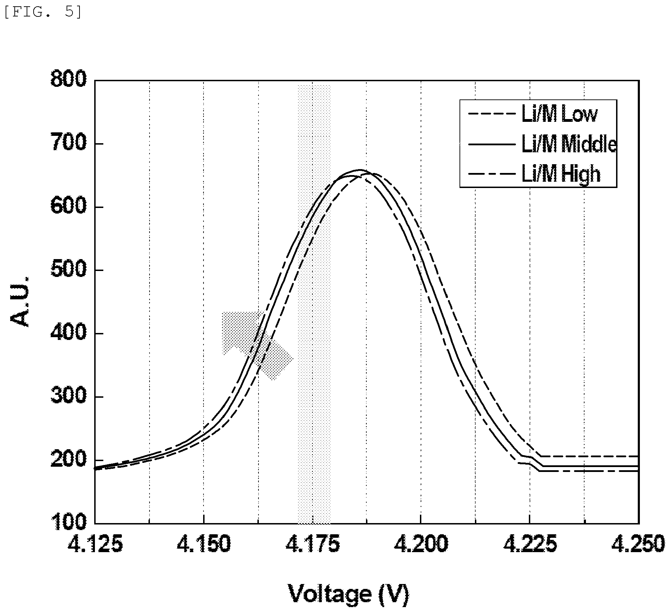

In order to solve this problem, in the present invention, the molar ratio (Li/M) of the lithium (Li) of the lithium source to the total metallic elements (M) of the positive electrode active material precursor was controlled to 1.03 to 1.05 as described above, wherein phase transition from hexagonal (H2) to hexagonal (H3) during charge is adjusted to start at a low voltage by adding a sufficient amount of the lithium. As a result, the ratio of the charge and discharge capacity at a charge end voltage of 4.1 V to 4.175 V to the charge and discharge capacity at a charge end voltage of 4.2 V to 4.275 V may be increased. At the same time, a decrease in average voltage and charge and discharge capacity at 4.2 V to 4.275 V due to an excessively large amount of the lithium was prevented by limiting an upper limit value of the Li/M to 1.05 (FIG. 5).

In a case in which the Li/M is less than 1.03, since a phase transition potential is high, the charge and discharge capacity at a charge end voltage of 4.1 V to 4.175 V may be low, and, in a case in which the Li/M is greater than 1.05, since a ratio of Li occupying a Ni site is excessively high, the charge and discharge capacity at a charge end voltage of 4.2 V to 4.275 V may be rather reduced.

As described above, the Li/M range used in the preparation method of the present invention is specified so that a quantitative capacity value is also high while exhibiting excellent charge and discharge characteristics evenly at various charge end voltages.

In the present invention, the sintering is performed in an atmosphere with an oxygen concentration of 85% or more, and may be specifically performed in an atmosphere with an oxygen concentration of 85% to 95% or 87% to 93%.

In the present invention, while controlling the molar ratio (Li/M) of the lithium (Li) of the lithium source to the total metallic elements (M) of the positive electrode active material precursor as described above, the oxygen concentration at which the sintering is performed was limited to 85% or more at the same time. Through this, the purpose of the present invention may be achieved more effectively by further maximizing an effect of decreasing the phase transition potential by increasing the Li/M ratio.

In a case in which the oxygen concentration is less than 85%, since the phase transition potential is high, capacity at a relatively low charge end voltage (4.1 V to 4.175 V) may be reduced.

Also, the molar ratio (Li/M) of the lithium (Li) of the lithium source to the total metallic elements (M) of the positive electrode active material precursor is in a range of 1.035 to 1.045, and, at the same time, the sintering may be performed in an atmosphere with an oxygen concentration of greater than 85% to less than 95%.

Furthermore, in the oxygen atmosphere in the above range, the sintering may be performed for 5 hours to 30 hours.

In the present invention, the sintering may be performed at 700°C to 900°C, more preferably, at 700°C to 850°C or 730°C to 750°C. Also, the temperature may be increased at a heating rate of 2°C/min to 10°C/min to the sintering temperature during the sintering, and may be more preferably increased at a heating rate of 3°C/min to 7°C/min.

In the present invention, a lithium-containing sulfate, nitrate, acetate, carbonate, oxalate, citrate, halide, hydroxide, or oxyhydroxide may be used as the lithium source, and the lithium source is not particularly limited as long as it may be dissolved in water. Specifically, the lithium source may be $Li_2CO_3$, $LiNO_3$, $LiNO_2$, $LiOH$, $LiOH \cdot H_2O$, $LiH$, $LiF$, $LiCl$, $LiBr$, $LiI$, $CH_3COOLi$, $Li_2O$, $Li_2SO_4$, $CH_3COOLi$, or $Li_3C_6H_5O_7$, and any one thereof or a mixture of two or more thereof may be used.

In the present invention, the lithium transition metal oxide may be a compound represented by Formula 1 below.

[Formula 1]     $Li_aNi_{1-(b+c+d)}Co_bMn_cQ_dO_{2+e}$

In Formula 1,

Q is at least one selected from the group consisting of aluminum (Al), magnesium (Mg), vanadium (V), titanium (Ti), and zirconium (Zr), and
$1.0 \leq a \leq 1.3$, $0 < b \leq 0.5$, $0 < c \leq 0.5$, $0 \leq d \leq 0.1$, $0 < b+c+d \leq 0.4$, and $-0.1 \leq e \leq 1.0$.

Step (S3)

The lithium transition metal oxide is washed with a washing solution.

With respect to the high-nickel (high-Ni) lithium composite transition metal oxide, since a residual amount of lithium by-products present in the form of $LiOH$ and $Li_2CO_3$ on a surface of the positive electrode active material is increased, a problem may occur in which resulting gas generation and swelling phenomenon occur. Thus, a washing process for removing the residual lithium by-products is performed.

Also, in order to improve physical properties of a lithium secondary battery by appropriately removing the residual lithium by-products, the washing solution may be used in an amount of 50 parts by weight to 110 parts by weight based on 100 parts by weight of the lithium transition metal oxide, and, more specifically, may be used in an amount of 60 parts by weight to 110 parts by weight based on 100 parts by weight of the lithium transition metal oxide.

In a case in which the amount of the washing solution is outside the above range, for example, in a case in which the amount of the washing solution is less than 50 parts by weight based on 100 parts by weight of the lithium transition metal oxide, since residual lithium is not sufficiently washed, the charge and discharge capacity at a charge end voltage of 4.2 V to 4.275 V is reduced due to the lithium remaining on the surface of the lithium transition metal oxide when the lithium transition metal oxide is used in the secondary battery, and, in a case in which the amount of the washing solution is greater than 110 parts by weight based on 100 parts by weight of the lithium transition metal oxide, since the lithium on the surface of the lithium transition metal oxide is excessively washed, lithium in the lithium transition metal oxide moves to the surface, and, as a result, a problem may occur in which the charge and discharge capacity of the secondary battery at a charge end voltage of 4.2 V to 4.275 V is reduced.

The washing may be performed by a method of adding the lithium transition metal oxide to the washing solution and stirring.

A solvent of the washing solution may be deionized water, distilled water, or a combination thereof, and, in this case, since lithium is easily dissolved, the residual lithium on the surface of the lithium transition metal oxide may be effectively removed.

Also, temperature during washing may be in a range of 30°C or less, preferably, -10°C to 30°C, or 0°C to 20°C, and washing time may be in a range of 10 minutes to 1 hour, preferably, about 20 minutes to about 40 minutes. When the washing temperature and the washing time satisfy the above ranges, the lithium by-products may be effectively removed.

**<Positive Electrode Active Material>**

The positive electrode active material according to the present invention is characterized in that it includes nickel, cobalt, and manganese, wherein an amount of the nickel among total metallic elements is 60 mol% or more, and a value calculated by Equation 1 below is in a range of 90% to 100%.

$$[\text{Equation 1}]$$

$$(\text{first discharge capacity})/(\text{second discharge capacity}) \times 100$$

In Equation 1,

the first discharge capacity is measured by charging at a constant current of 0.2 C to a first charge end voltage in a constant current/constant voltage (CC/CV) mode and then discharging at a constant current of 0.2 C to 2.5 V in a CC mode, and

the second discharge capacity is measured by charging at a constant current of 0.2 C to a second charge end voltage in a CC/CV mode and then discharging at a constant current of 0.2 C to 2.5 V in a CC mode,

wherein, the first charge end voltage is in a range of 4.1 V to 4.175 V, and the second charge end voltage is in a range of 4.2 V to 4.275 V.

Also, the positive electrode active material according to the present invention may further satisfy that a value calculated by Equation 2 below is in a range of 90% to 100%.

$$[\text{Equation 2}]$$

$$(\text{first charge capacity})/(\text{second charge capacity}) \times 100$$

In Equation 2,

the first charge capacity is measured by charging at a constant current of 0.2 C to a first charge end voltage in a CC/CV mode and then discharging at a constant current of 0.2 C to 2.5 V in a CC mode, and

the second charge capacity is measured by charging at a constant current of 0.2 C to a second charge end voltage in a CC/CV mode and then discharging at a constant current of 0.2 C to 2.5 V in a CC mode,

wherein, the first charge end voltage is in a range of 4.1 V to 4.175 V, and the second charge end voltage is in a range of 4.2 V to 4.275 V.

Furthermore, before measuring the first discharge capacity and the second discharge capacity, or before measuring the first charge capacity and the second charge capacity, a step of activating the secondary battery by charging and discharging may be first performed, and, in this case, a charge end voltage for the activation may be the same or different from the first charge end voltage or the second charge end voltage.

For example, after activating the secondary battery by charging at a constant current of 0.2 C to a voltage of 4.2 V to 4.275 V in a CC/CV mode and then discharging at a constant current of 0.2 C to 2.5 V in a CC mode, the first charge capacity and the second charge capacity may be measured.

As described above, the positive electrode active material according to the present invention exhibits excellent charge and discharge capacities under both conditions of a charge end voltage of 4.2 to 4.275 V and a charge end voltage of 4.1 V to 4.175 V, and, particularly, it is characterized in that the charge and discharge capacity is not significantly reduced even if the charge end voltage is reduced. Thus, a ratio of the charge and discharge capacity at the first charge end voltage (4.1 V to 4.175 V) to the charge and discharge capacity at the second charge end voltage (4.2 V to 4.275 V) is calculated as a high value, a discharge capacity ratio expressed by Equation 1 is in a range of 90% to 100%, and a charge capacity ratio expressed by Equation 2 is in a range of 90% to 100%.

The positive electrode active material may include a lithium transition metal oxide represented by Formula 1 below.

[Formula 1] $\qquad$ $Li_aNi_{1-(b+c+d)}Co_bMn_cQ_dO_{2+e}$

Definition of Formula 1 is the same as described above.

**<Positive Electrode for Lithium Secondary Battery and Lithium Secondary Battery>**

Also, the present invention provides a positive electrode for a lithium secondary battery which includes the positive electrode active material prepared by the above-described method.

Specifically, the positive electrode includes a positive electrode collector and a positive electrode active material layer which is disposed on at least one surface of the positive electrode collector and includes the above-described positive electrode active material.

The positive electrode collector is not particularly limited as long as it has conductivity without causing adverse chemical changes in the battery, and, for example, stainless steel, aluminum, nickel, titanium, fired carbon, or aluminum or stainless steel that is surface-treated with one of carbon, nickel, titanium, silver, or the like may be used. Also, the positive electrode collector may typically have a thickness of 3 um to 500 $\mu$m, and microscopic irregularities may be formed on the surface of the collector to improve the adhesion of the positive electrode active material. The positive electrode collector, for example, may be used in various shapes such as that of a film, a sheet, a foil, a net, a porous body, a foam body, a non-woven fabric body, and the like.

The positive electrode active material layer may include a conductive agent and a binder in addition to the positive electrode active material.

In this case, the positive electrode active material may be included in an amount of 80 wt% to 99 wt%, more specifically, 85 wt% to 98 wt% based on a total weight of the positive electrode active material layer. When the positive electrode active material is included in an amount within the above range, excellent capacity characteristics may be obtained.

In this case, the conductive agent is used to provide conductivity to the electrode, wherein any conductive agent may be used without particular limitation as long as it has suitable electron conductivity without causing adverse chemical changes in the battery. Specific examples of the conductive agent may be graphite such as natural graphite or artificial graphite; carbon-based materials such as carbon black, acetylene black, Ketjen black, channel black, furnace black, lamp black, thermal black, and carbon fibers; powder or fibers of metal such as copper, nickel, aluminum, and silver; conductive whiskers such as zinc oxide whiskers and potassium titanate whiskers; conductive metal oxides such as titanium oxide; or conductive polymers such as polyphenylene derivatives, and any one thereof or a mixture of two or more thereof may be used. The conductive agent may be typically included in an amount of 1 wt% to 30 wt% based on the total weight of the positive electrode active material layer.

The binder improves the adhesion between positive electrode active material particles and the adhesion between the positive electrode active material and the current collector. Specific examples of the binder may be polyvinylidene fluoride (PVDF), polyvinylidene fluoride-hexafluoropropylene copolymer (PVDF-co-HFP), polyvinyl alcohol, polyacrylonitrile, carboxymethyl cellulose (CMC), starch, hydroxypropyl cellulose, regenerated cellulose, polyvinylpyrrolidone, polytetrafluoroethylene, polyethylene, polypropylene, an ethylene-propylene-diene monomer (EPDM), a sulfonated-EPDM, a styrene-butadiene rubber (SBR), a fluorine rubber, or various copolymers thereof, and any one thereof or a mixture of two or more thereof may be used. The binder may be included in an amount of 1 wt% to 30 wt% based on the total weight of the positive electrode active material layer.

The positive electrode may be prepared according to a typical method of preparing a positive electrode except that the above-described positive electrode active material is used. Specifically, a positive electrode material mixture, which is prepared by dissolving or dispersing the positive electrode active material as well as optionally the binder and the conductive agent in a solvent, is coated on the positive electrode collector, and the positive electrode may then be prepared by drying and rolling the coated positive electrode collector. In this case, types and amounts of the positive electrode active material, the binder, and the conductive are the same as those previously described.

The solvent may be a solvent normally used in the art. The solvent may include dimethyl sulfoxide (DMSO), isopropyl alcohol, N-methylpyrrolidone (NMP), acetone, or water, and any one thereof or a mixture of two or more thereof may be used. An amount of the solvent used may be sufficient if the solvent may dissolve or disperse the positive electrode active material, the conductive agent, and the binder in consideration of a coating thickness of the slurry and manufacturing yield, and may allow to have a viscosity that may provide excellent thickness uniformity during the subsequent coating for the preparation of the positive electrode.

Also, as another method, the positive electrode may be prepared by casting the positive electrode material mixture on a separate support and then laminating a film separated from the support on the positive electrode collector.

Furthermore, in the present invention, an electrochemical device including the positive electrode may be prepared. The electrochemical device may specifically be a battery or a capacitor, and may more specifically be a lithium secondary battery.

The lithium secondary battery specifically includes a positive electrode, a negative electrode disposed to face the positive electrode, a separator disposed between the positive electrode and the negative electrode, and an electrolyte. Since the positive electrode is the same as described above, detailed descriptions thereof will be omitted, and the remaining configurations will be only described in detail below.

Also, the lithium secondary battery may further optionally include a battery container accommodating an electrode assembly of the positive electrode, the negative electrode, and the separator, and a sealing member sealing the battery container.

In the lithium secondary battery, the negative electrode includes a negative electrode collector and a negative electrode active material layer disposed on the negative electrode collector.

The negative electrode collector is not particularly limited as long as it has high conductivity without causing adverse chemical changes in the battery, and, for example, copper, stainless steel, aluminum, nickel, titanium, fired carbon, copper or stainless steel that is surface-treated with one of carbon, nickel, titanium, silver, or the like, and an aluminum-cadmium alloy may be used. Also, the negative electrode collector may typically have a thickness of 3 um to 500 $\mu$m, and, similar to the positive electrode collector, microscopic irregularities may be formed on the surface of the collector to improve the adhesion of a negative electrode active material. The negative electrode collector, for example, may be used in various shapes such as that of a film, a sheet, a foil, a net, a porous body, a foam body, a non-woven fabric body, and the like.

The negative electrode active material layer optionally includes a binder and a conductive agent in addition to the negative electrode active material.

A compound capable of reversibly intercalating and deintercalating lithium may be used as the negative electrode active material. Specific examples of the negative electrode active material may be a carbonaceous material such as artificial graphite, natural graphite, graphitized carbon fibers, and amorphous carbon; a metallic compound alloyable with lithium such as silicon (Si), aluminum (Al), tin (Sn), lead (Pb), zinc (Zn), bismuth (Bi), indium (In), magnesium (Mg), gallium (Ga), cadmium (Cd), a Si alloy, a Sn alloy, or an Al alloy; a metal oxide which may be doped and undoped with lithium such as $SiO_\beta(0<\beta<2)$, $SnO_2$, vanadium oxide, and lithium vanadium oxide; or a composite including the metallic compound and the carbonaceous material such as a Si-C composite or a Sn-C composite, and any one thereof or a mixture of two or more thereof may be used. Also, a metallic lithium thin film may be used as the negative electrode active material. Furthermore, both low crystalline carbon and high crystalline carbon may be used as the carbon material. Typical examples of the low crystalline carbon may be soft carbon and hard carbon, and typical examples of the high crystalline carbon may be irregular, planar, flaky, spherical, or fibrous natural graphite or artificial graphite, Kish graphite, pyrolytic carbon, mesophase pitch-based carbon fibers, meso-carbon microbeads, mesophase pitches, and high-temperature sintered carbon such as petroleum or coal tar pitch derived cokes.

The negative electrode active material may be included in an amount of 80 wt% to 99 wt% based on a total weight of the negative electrode active material layer.

The binder is a component that assists in the binding between the conductive agent, the active material, and the current collector, wherein the binder may typically be added in an amount of 0.1 part by weight to 10 parts by weight based on 100 parts by weight of the total weight of the negative electrode active material layer. Examples of the binder may be polyvinylidene fluoride (PVDF), polyvinyl alcohol, carboxymethylcellulose (CMC), starch, hydroxypropylcellulose, regenerated cellulose, polyvinylpyrrolidone, polytetrafluoroethylene, polyethylene, polypropylene, an ethylene-propylene-diene polymer (EPDM), a sulfonated-EPDM, a styrene-butadiene rubber, a nitrile-butadiene rubber, a fluoro rubber, and various copolymers thereof.

The conductive agent is a component for further improving conductivity of the negative electrode active material, wherein the conductive agent may be added in an amount of 10 wt% or less, preferably, 5 wt% or less based on the total weight of the negative electrode active material layer. The conductive agent is not particularly limited as long as it has conductivity without causing adverse chemical changes in the battery, and, for example, a conductive material, such as: graphite such as natural graphite or artificial graphite; carbon black such as acetylene black, Ketjen black, channel black, furnace black, lamp black, and thermal black; conductive fibers such as carbon fibers or metal fibers; fluorocarbon; metal powder such as aluminum powder and nickel powder; conductive whiskers such as zinc oxide whiskers and potassium titanate whiskers; conductive metal oxide such as titanium oxide; or polyphenylene derivatives, may be used.

For example, the negative electrode active material layer may be prepared by coating a negative electrode material mixture, which is prepared by dissolving or dispersing optionally the binder and the conductive agent as well as the negative electrode active material in a solvent, on the negative electrode collector and drying the coated negative electrode collector, or may be prepared by casting the negative electrode material mixture on a separate support and then laminating a film separated from the support on the negative electrode collector.

In the lithium secondary battery, the separator separates the negative electrode and the positive electrode and provides a movement path of lithium ions, wherein any separator may be used as the separator without particular limitation as long as it is typically used in a lithium secondary battery, and particularly, a separator having high moisture-retention ability for an electrolyte as well as low resistance to the transfer of electrolyte ions may be used. Specifically, a porous polymer film, for example, a porous polymer film prepared from a polyolefin-based polymer, such as an ethylene homopolymer, a propylene homopolymer, an ethylene/butene copolymer, an ethylene/hexene copolymer, and an ethylene/methacrylate copolymer, or a laminated structure having two or more layers thereof may be used. Also, a typical porous nonwoven fabric, for example, a nonwoven fabric formed of high melting point glass fibers or polyethylene terephthalate fibers may be used. Furthermore, a coated separator including a ceramic component or a polymer material may be used to secure heat resistance or mechanical strength, and the separator having a single layer or multilayer structure may be optionally used.

Also, the electrolyte used in the present invention may include an organic liquid electrolyte, an inorganic liquid electrolyte, a solid polymer electrolyte, a gel-type polymer electrolyte, a solid inorganic electrolyte, or a molten-type inorganic electrolyte which may be used in the preparation of the lithium secondary battery, but the present invention is not limited thereto.

Specifically, the electrolyte may include an organic solvent and a lithium salt.

Any organic solvent may be used as the organic solvent without particular limitation so long as it may function as a medium through which ions involved in an electrochemical reaction of the battery may move. Specifically, an ester-based solvent such as methyl acetate, ethyl acetate, $\gamma$-butyrolactone, and $\varepsilon$-caprolactone; an ether-based solvent such as dibutyl ether or tetrahydrofuran; a ketone-based solvent such as cyclohexanone; an aromatic hydrocarbon-based solvent such as benzene and fluorobenzene; or a carbonate-based solvent such as dimethyl carbonate (DMC), diethyl carbonate (DEC), methylethyl carbonate (MEC), ethylmethyl carbonate (EMC), ethylene carbonate (EC), and propylene carbonate (PC); an alcohol-based solvent such as ethyl alcohol and isopropyl alcohol; nitriles such as R-CN (where R is a linear, branched, or cyclic C2-C20 hydrocarbon group and may include a double-bond aromatic ring or ether bond); amides such as dimethylformamide; dioxolanes such as 1,3-dioxolane; or sulfolanes may be used as the organic solvent. Among these solvents, the carbonate-based solvent may be used, and, for example, a mixture of a cyclic carbonate (e.g., ethylene carbonate or propylene carbonate) having high ionic conductivity and high dielectric constant, which may increase charge/discharge performance of the battery, and a low-viscosity linear carbonate-based compound (e.g., ethylmethyl carbonate, dimethyl carbonate, or diethyl carbonate) may be used. In this case, the performance of the electrolyte solution may be excellent when the cyclic carbonate and the chain carbonate are mixed in a volume ratio of about 1:1 to about 1:9.

The lithium salt may be used without particular limitation as long as it is a compound capable of providing lithium ions used in the lithium secondary battery. Specifically, $LiPF_6$, $LiClO_4$, $LiAsF_6$, $LiBF_4$, $LiSbF_6$, $LiAlO_4$, $LiAlCl_4$, $LiCF_3SO_3$, $LiC_4F_9SO_3$, $LiN(C_2F_5SO_3)_2$, $LiN(C_2F_5SO_2)_2$, $LiN(CF_3SO_2)_2$, LiCl, LiI, or $LiB(C_2O_4)_2$ may be used as the lithium salt. The lithium salt may be used in a concentration range of 0.1 M to 2.0 M. Since the electrolyte may have appropriate conductivity and viscosity when the concentration of the lithium salt is included within the above range, excellent performance of the electrolyte may be obtained and lithium ions may effectively move.

In order to improve life characteristics of the battery, suppress the reduction in battery capacity, and improve discharge capacity of the battery, at least one additive, for example, a halo-alkylene carbonate-based compound such as difluoroethylene carbonate, pyridine, triethylphosphite, triethanolamine, cyclic ether, ethylenediamine, n-glyme, hexaphosphorictriamide, a nitrobenzene derivative, sulfur, a quinone imine dye, N-substituted oxazolidinone, N,N-substituted imidazolidine, ethylene glycol dialkyl ether, an ammonium salt, pyrrole, 2-methoxy ethanol, or aluminum trichloride, may be further included in the electrolyte in addition to the electrolyte components. In this case, the additive may be included in an amount of 0.1 part by weight to 5 parts by weight based on 100 parts by weight of a total weight of the electrolyte.

As described above, since the lithium secondary battery including the positive electrode active material according to the present invention stably exhibits excellent discharge capacity, output characteristics, and capacity retention, the lithium secondary battery is suitable for portable devices, such as mobile phones, notebook computers, and digital cameras, and electric cars such as hybrid electric vehicles (HEVs).

Thus, according to another embodiment of the present invention, a battery module including the lithium secondary battery as a unit cell and a battery pack including the battery module are provided.

The battery module or the battery pack may be used as a power source of at least one medium and large sized device of a power tool; electric cars including an electric vehicle (EV), a hybrid electric vehicle, and a plug-in hybrid electric vehicle (PHEV); or a power storage system.

A shape of the lithium secondary battery of the present invention is not particularly limited, but a cylindrical type using a can, a prismatic type, a pouch type, or a coin type may be used.

The lithium secondary battery according to the present invention may not only be used in a battery cell that is used as a power source of a small device, but may also be used as a unit cell in a medium and large sized battery module including a plurality of battery cells.

## Examples

Hereinafter, the present invention will be described in more detail, according to examples. However, the following examples are merely presented to exemplify the present invention, and the scope of the present invention is not limited thereto.

## Preparation of Positive Electrode Active Material

## Example 1

A $Ni_{0.86}Co_{0.1}Mn_{0.02}Al_{0.02}(OH)_2$ positive electrode active material precursor and a LiOH lithium source were put into a Henschel mixer (700L) in amounts such that a molar ratio (Li/M) of lithium (Li) of the lithium source to total metallic elements (M) of the positive electrode active material precursor was 1.030, and mixing was performed at a center speed of 300 rpm for 20 minutes. The mixed powder was put into an alumina crucible, heated at a rate of 5°C/min, and then sintered at 790°C for 10 hours in an atmosphere with an oxygen concentration of 90% to prepare a lithium transition metal oxide.

300 g of the prepared lithium transition metal oxide was put in 240 mL of pure water at 10°C (converted to 80 parts by weight of the water based on 100 parts by weight of the lithium transition metal oxide), washed by being stirred for 30 minutes, and filtered for 20 minutes. A positive electrode active material was prepared by drying the filtered lithium transition metal oxide in a vacuum oven at 130°C for 10 hours.

## Examples 2 to 11, Comparative Examples 1 to 5

Positive electrode active materials were prepared in the same manner as in Example 1 except that reaction conditions were changed as in Table 1 below.

[Table 1]

|  | Li/M (molar ratio) | Oxygen concentration (%) | Water content based on 100 parts by weight of positive electrode active material (parts by weight) |
|---|---|---|---|
| Example 1 | 1.030 | 90 | 80 |
| Example 2 | 1.035 | 90 | 80 |
| Example 3 | 1.040 | 90 | 80 |
| Example 4 | 1.045 | 90 | 80 |
| Example 5 | 1.050 | 90 | 80 |

(continued)

|  | Li/M (molar ratio) | Oxygen concentration (%) | Water content based on 100 parts by weight of positive electrode active material (parts by weight) |
|---|---|---|---|
| Example 6 | 1.040 | 85 | 80 |
| Example 7 | 1.040 | 90 | 80 |
| Example 8 | 1.040 | 95 | 80 |
| Example 9 | 1.040 | 100 | 80 |
| Example 10 | 1.040 | 90 | 60 |
| Example 11 | 1.040 | 90 | 100 |
| Comparative Example 1 | 1.025 | 90 | 80 |
| Comparative Example 2 | 1.055 | 90 | 80 |
| Comparative Example 3 | 1.040 | 80 | 80 |
| Comparative Example 4 | 1.040 | 90 | 40 |
| Comparative Example 5 | 1.040 | 90 | 120 |

**Preparation of Lithium Secondary Battery**

Each of the above-prepared positive electrode active materials, a carbon black conductive agent, and a PVdF binder were mixed in a N-methylpyrrolidone solvent in a weight ratio of 95:2.5:2.5 to prepare a positive electrode material mixture (viscosity: 5,000 mPa-s), and one surface of an aluminum current collector was coated with the positive electrode material mixture, dried at 130°C, and then rolled to prepare a positive electrode.

Lithium metal was used as a negative electrode.

A lithium secondary battery, as a coin half cell, was prepared by preparing an electrode assembly by disposing a porous polyethylene separator between the above-prepared positive electrode and the negative electrode, disposing the electrode assembly in a case, and then injecting an electrolyte solution into the case. In this case, the electrolyte solution was prepared by dissolving 1.0 M lithium hexafluorophosphate ($LiPF_6$) in an organic solvent composed of ethylene carbonate/dimethyl carbonate/ethyl methyl carbonate (mixing volume ratio of EC/DMC/EMC=3/4/3).

**Experimental Example 1: Evaluation of Charge and Discharge Capacity Ratios**

Each lithium secondary battery cell was charged at 0.2 C in a CC/CV mode until a charge end voltage was 4.25 V (end current 0.005 C) and discharged at a constant current of 0.2 C to 2.5 V in a first cycle at 25°C. In a second cycle, charge and discharge were performed under the same conditions of a charge end voltage of 4.175 V and a discharge end voltage of 2.5 V. In a third cycle, charge and discharge were performed under the same conditions of a charge end voltage of 4.25 V and a discharge end voltage of 2.5 V.

Charge capacities of the second cycle and the third cycle and charge capacity ratios are presented in Table 2 below, and discharge capacities of the second cycle and the third cycle and discharge capacity ratios are presented in Table 3.

[Table 2]

|  | Charge capacity (mAh/g) | | |
|---|---|---|---|
|  | 4.25 V | 4.175 V | Charge capacity ratio (%,4.175 V/4.25 V) |
| Example 1 | 218.9 | 198.8 | 90.8 |
| Example 2 | 218.7 | 199.5 | 91.2 |

(continued)

|  | Charge capacity (mAh/g) | | |
|---|---|---|---|
|  | 4.25 V | 4.175 V | Charge capacity ratio (%,4.175 V/4.25 V) |
| Example 3 | 217.8 | 199.1 | 91.4 |
| Example 4 | 217.5 | 199.0 | 91.5 |
| Example 5 | 216.6 | 198.6 | 91.7 |
| Example 6 | 217.9 | 198.7 | 91.2 |
| Example 7 | 217.8 | 199.1 | 91.4 |
| Example 8 | 217.7 | 198.8 | 91.3 |
| Example 9 | 217.8 | 198.9 | 91.3 |
| Example 10 | 217.4 | 198.1 | 91.1 |
| Example 11 | 218.7 | 198.8 | 90.9 |
| Comparative Example 1 | 219.0 | 195.1 | 89.1 |
| Comparative Example 2 | 214.4 | 196.6 | 91.7 |
| Comparative Example 3 | 217.5 | 194.7 | 89.5 |
| Comparative Example 4 | 216.3 | 194.2 | 89.8 |
| Comparative Example 5 | 218.1 | 195.1 | 89.5 |

[Table 3]

|  | Discharge capacity (mAh/g) | | |
|---|---|---|---|
|  | 4.25 V | 4.175 V | Discharge capacity ratio (%,4.175 V/4.25 V) |
| Example 1 | 218.0 | 197.6 | 90.6 |
| Example 2 | 217.8 | 198.3 | 91.0 |
| Example 3 | 216.9 | 198.1 | 91.3 |
| Example 4 | 216.4 | 197.8 | 91.4 |
| Example 5 | 216.0 | 197.6 | 91.5 |
| Example 6 | 216.8 | 197.7 | 91.2 |
| Example 7 | 216.9 | 197.9 | 91.2 |
| Example 8 | 216.8 | 197.8 | 91.2 |
| Example 9 | 216.7 | 197.9 | 91.3 |
| Example 10 | 216.4 | 196.9 | 91.0 |
| Example 11 | 217.8 | 197.6 | 90.7 |
| Comparative Example 1 | 218.1 | 194.0 | 88.9 |
| Comparative Example 2 | 213.5 | 195.4 | 91.5 |
| Comparative Example 3 | 216.8 | 193.5 | 89.2 |
| Comparative Example 4 | 215.1 | 193.0 | 89.7 |
| Comparative Example 5 | 217.5 | 194.2 | 89.3 |

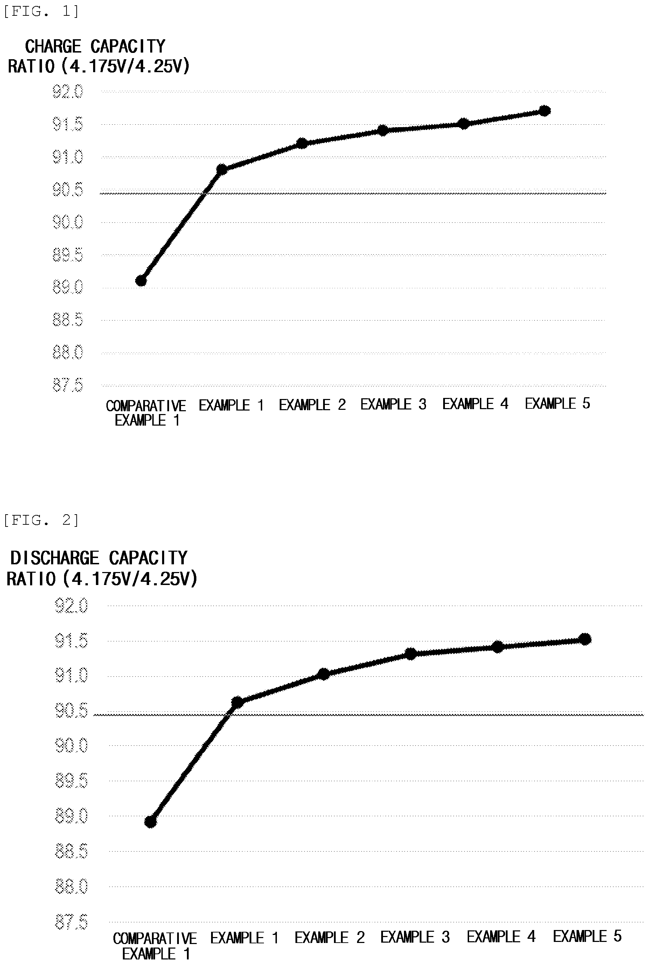

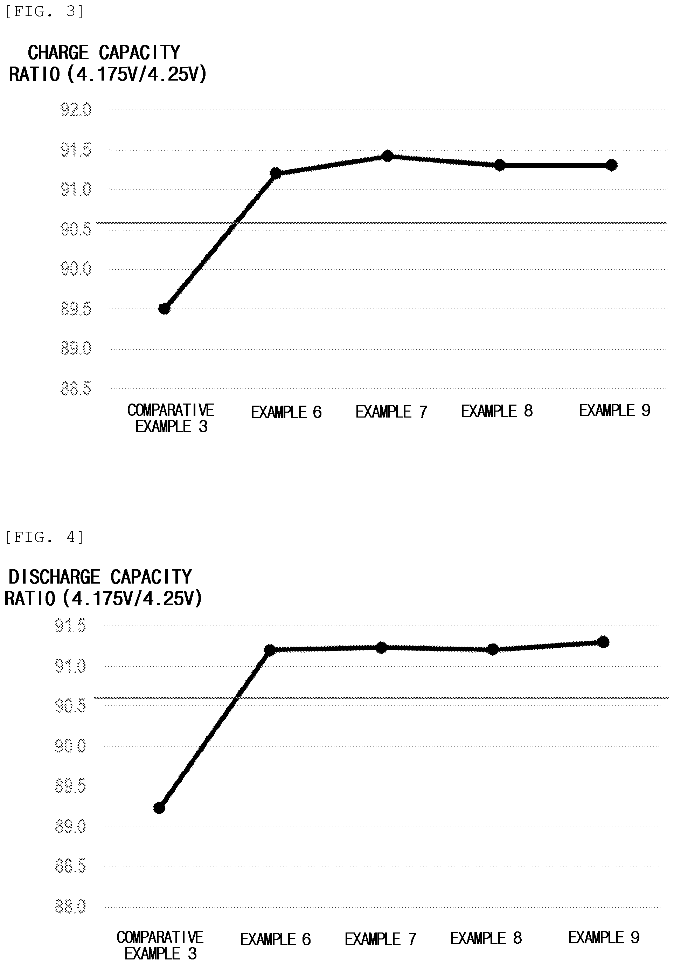

As illustrated in Tables 2 and 3 and FIGS. 1 to 4, in the lithium secondary batteries of Examples 1 to 9 prepared according to the preparation method of the present invention, both charge and discharge capacities were excellent at charge end voltages of 4.25 V and 4.175 V, respectively, and it may be confirmed that charge and discharge capacity ratios were significantly improved in comparison to Comparative Example 1 having a Li/M value of less than 1.03 and Comparative Example 3 in which the oxygen concentration under sintering conditions was less than 85%.

With respect to Comparative Example 2 in which the Li/M value was greater than 1.05, since an excessive amount of Li was added, both charge and discharge capacities were lower than those of the examples, and thus, it may be understood that output characteristics themselves were degraded.

Referring to Comparative Examples 4 and 5 in which water was used in an amount outside the range of 50 parts by weight to 110 parts by weight based on 100 parts by weight of the positive electrode active material during the washing process, it was confirmed that, in Comparative Example 4, since an amount of residual lithium on the surface of the positive electrode active material was high due to the use of an excessively small amount of water during washing, it acts as resistance, and thus, it was confirmed that charge and discharge capacity ratios were reduced and deviated from 90%, and, in Comparative Example 5, surface lithium was excessively washed by using an excessive amount of water during washing, and, as a result, it was confirmed that lithium in the positive electrode active material moved to the outside to reduce charge and discharge capacity ratios.

**Experimental Example 2: Initial Capacity Evaluation**

The charge capacity and discharge capacity of the first cycle, which were measured in Experimental Example 1, are summarized in Table 4 below.

[Table 4]

|  | Charge capacity (mAh/g) | Discharge capacity (mAh/g) | Charge and discharge efficiency (%) |
|---|---|---|---|
| Example 1 | 240.1 | 218.9 | 91.2 |
| Example 2 | 238.9 | 218.7 | 91.5 |
| Example 3 | 237.5 | 217.7 | 91.7 |
| Example 4 | 236.9 | 217.2 | 91.7 |
| Example 5 | 237.1 | 216.8 | 91.4 |
| Comparative Example 1 | 240.5 | 218.7 | 90.9 |
| Comparative Example 2 | 235.2 | 214.2 | 91.1 |

As illustrated in Table 4, all the examples exhibited excellent initial charge and discharge capacities, and, with respect to Comparative Example 2 having a Li/M value of greater than 1.05, it was confirmed that initial charge and discharge capacities were overall reduced.

As described above, in a case in which the positive electrode active material prepared according to the present invention is used, it may be understood that, while the ratio of the charge and discharge capacity at a charge end voltage of 4.1 V to 4.175 V to the charge and discharge capacity at a charge end voltage of 4.2 V to 4.275 V of the lithium secondary battery was high, the initial charge and discharge capacity was also excellent at the same time.

Experimental Example 3: Room-temperature DCIR (mohm) **Evaluation of Secondary Battery**

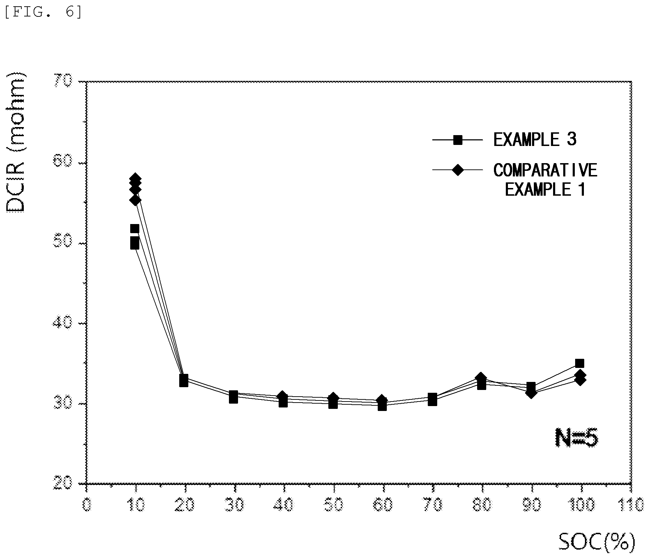

Direct current internal resistance (DCIR) characteristics for each state of charge (SOC) were evaluated for the lithium secondary batteries of Example 3 and Comparative Example 1, and the results thereof are presented in FIG. 6.

Specifically, after the lithium secondary batteries were charged and discharged twice at 0.5 C under CC-CV charging conditions at 25°C (voltage operating range: 3.0 ~ 4.2 V, SOC 100%) and charged again at 0.5 C under CC-CV conditions, the lithium secondary batteries were discharged at 0.5 C until reaching an SOC of 10%, DCIR according to the following equation was calculated.

In this case, the DCIR was measured per a unit of SOC 10 from an SOC of 100 to an SOC of 10.

$$DCIR = (V_0 - V_1)/I$$

$$(V_0 = \text{voltage before pulse, } V_1 = \text{voltage after pulse}$$

$$10s, I = \text{applied current}$$

[Table 5]

| | DCIR (SOC 100%) | DCIR (SOC 50%) | DCIR (SOC 10%) |
|---|---|---|---|
| Example 3 | 33.5 | 30.2 | 50.6 |
| Comparative Example 1 | 35.0 | 30.3 | 56.8 |

According to the above results, in the lithium secondary battery using the positive electrode active material of the example according to the present invention, it was confirmed that room-temperature DCIR characteristics better than those of the comparative example were secured. Particularly, it may be understood that excellent DCIR characteristics of the example were more significantly exhibited at an SOC of 10% and an SOC of 100%.

**Experimental Example 4: Life Characteristics Evaluation**

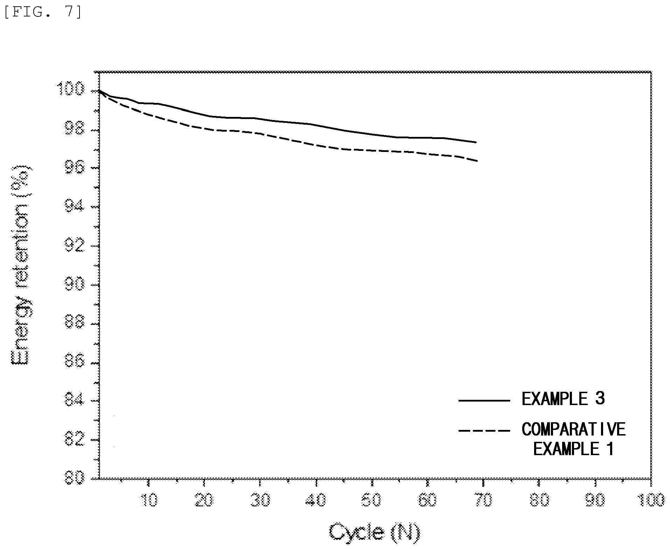

Life characteristics were evaluated for the lithium secondary batteries of Example 3 and Comparative Example 1.
Specifically, charging and discharging under the following conditions at 20°C were set as one cycle, the charging and discharging were repeated up to 70 cycles to evaluate a capacity retention (%), and the results thereof are presented in FIG. 7.

- Charging conditions (CP/CV): charge end voltage 4.1 V, 0.5 CP, end current 0.005 C
- Discharging conditions (CP/CV): 0.5 CP, 3.0 V cutoff

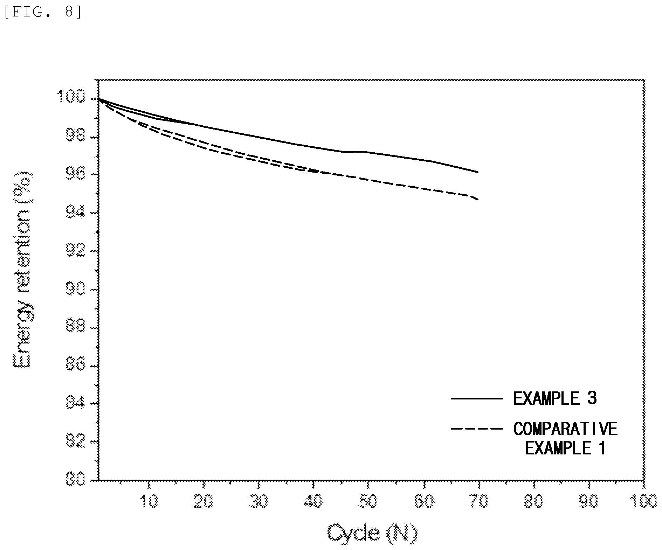

Also, results of preforming the same experiment by changing the temperature condition to 40°C are presented in FIG. 8.
As illustrated in FIGS. 7 and 8, with respect to the example, it may be understood that, since a decrease in capacity due to cycle repetition was suppressed in comparison to that of the comparative example, life characteristics were improved, and it was confirmed that this effect appeared under various temperature conditions.

**Claims**

1. A method of preparing a positive electrode active material, the method comprising steps of:

   (S1) preparing a positive electrode active material precursor including nickel, cobalt, and manganese;
   (S2) mixing the positive electrode active material precursor and a lithium source and sintering the mixture to form a lithium transition metal oxide; and
   (S3) washing the lithium transition metal oxide with a washing solution,
   wherein the sintering is performed in an atmosphere with an oxygen concentration of 85% or more,
   a molar ratio (Li/M) of lithium (Li) of the lithium source to total metallic elements (M) of the positive electrode active material precursor is in a range of 1.03 to 1.05, and
   the washing solution is used in an amount of 50 parts by weight to 110 parts by weight based on 100 parts by weight of the lithium transition metal oxide.

2. The method of claim 1, wherein the molar ratio (Li/M) of the lithium (Li) of the lithium source to the total metallic elements (M) of the positive electrode active material precursor is in a range of 1.035 to 1.045.

3. The method of claim 1, wherein the sintering is performed in an atmosphere with an oxygen concentration of 85% to 100%.

4. The method of claim 1, wherein the sintering is performed at 700°C to 900°C.

5. The method of claim 1, wherein the positive electrode active material precursor has an amount of the nickel (Ni) among the total metallic elements of 60 mol% or more.

6. The method of claim 1, wherein the lithium transition metal oxide is a compound represented by Formula 1:

[Formula 1] $Li_aNi_{1-(b+c+d)}Co_bMn_cQ_dO_{2+e}$

wherein, in Formula 1,

Q is at least one selected from the group consisting of aluminum (Al), magnesium (Mg), vanadium (V), titanium (Ti), and zirconium (Zr), and
$1.0 \leq a \leq 1.3$, $0 < b \leq 0.5$, $0 < c \leq 0.5$, $0 \leq d \leq 0.1$, $0 < b+c+d \leq 0.4$, and $-0.1 \leq e \leq 1.0$.

7. The method of claim 1, wherein the washing solution is used in an amount of 60 parts by weight to 100 parts by weight based on 100 parts by weight of the lithium transition metal oxide.

8. A positive electrode active material comprising nickel, cobalt, and manganese,

wherein an amount of the nickel among total metallic elements is 60 mol% or more, and
a value calculated by Equation 1 is in a range of 90% to 100%:

[Equation 1]

(first discharge capacity)/(second discharge capacity) ×

100

wherein, in Equation 1,

the first discharge capacity is measured by charging at a constant current of 0.2 C to a first charge end voltage in a constant current/constant voltage (CC/CV) mode and discharging at a constant current of 0.2 C to 2.5 V in a CC mode, and
the second discharge capacity is measured by charging at a constant current of 0.2 C to a second charge end voltage in a CC/CV mode and discharging at a constant current of 0.2 C to 2.5 V in a CC mode,
wherein, the first charge end voltage is in a range of 4.1 V to 4.175 V, and the second charge end voltage is in a range of 4.2 V to 4.275 V.

9. The positive electrode active material of claim 8, wherein a value calculated by Equation 2 is in a range of 90% to 100%:

[Equation 2]

(first charge capacity)/(second charge capacity) × 100

wherein, in Equation 2,

the first charge capacity is measured by charging at a constant current of 0.2 C to a first charge end voltage in a CC/CV mode and discharging at a constant current of 0.2 C to 2.5 V in a CC mode, and
the second charge capacity is measured by charging at a constant current of 0.2 C to a second charge end voltage in a CC/CV mode and discharging at a constant current of 0.2 C to 2.5 V in a CC mode,
wherein, the first charge end voltage is in a range of 4.1 V to 4.175 V, and the second charge end voltage is in a range of 4.2 V to 4.275 V.

10. The positive electrode active material of claim 8, further comprising a compound represented by Formula 1:

[Formula 1] $Li_aNi_{1-(b+c+d)}Co_bMn_cQ_dO_{2+e}$

wherein, in Formula 1,

Q is at least one selected from the group consisting of aluminum (Al), magnesium (Mg), vanadium (V), titanium (Ti), and zirconium (Zr), and

$1.0 \leq a \leq 1.3$, $0 < b \leq 0.5$, $0 < c \leq 0.5$, $0 \leq d \leq 0.1$, $0 < b+c+d \leq 0.4$, and $-0.1 \leq e \leq 1.0$.

11. A positive electrode for a lithium secondary battery, the positive electrode comprising the positive electrode active material of any one of claims 8 to 10.

[FIG. 1]

CHARGE CAPACITY
RATIO (4.175V/4.25V)

COMPARATIVE  EXAMPLE 1  EXAMPLE 2  EXAMPLE 3  EXAMPLE 4  EXAMPLE 5
EXAMPLE 1

[FIG. 2]

DISCHARGE CAPACITY
RATIO (4.175V/4.25V)

COMPARATIVE  EXAMPLE 1  EXAMPLE 2  EXAMPLE 3  EXAMPLE 4  EXAMPLE 5
EXAMPLE 1

[FIG. 3]

CHARGE CAPACITY
RATIO (4.175V/4.25V)

[FIG. 4]

DISCHARGE CAPACITY
RATIO (4.175V/4.25V)

[FIG. 5]

[FIG. 6]

[FIG. 7]

[FIG. 8]

EP 4 282 829 A1

[FIG. 9]

[FIG. 10]

## INTERNATIONAL SEARCH REPORT

| International application No. |
| --- |
| **PCT/KR2022/018741** |

**A.  CLASSIFICATION OF SUBJECT MATTER**

**C01G 53/00**(2006.01)i; **H01M 4/525**(2010.01)i; **H01M 4/505**(2010.01)i; **H01M 10/052**(2010.01)i

According to International Patent Classification (IPC) or to both national classification and IPC

**B.  FIELDS SEARCHED**

Minimum documentation searched (classification system followed by classification symbols)

C01G 53/00(2006.01); H01M 10/052(2010.01); H01M 4/36(2006.01); H01M 4/505(2010.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 니켈(nickel), 코발트(cobalt), 망간(manganese), 양극 활물질(cathode active material), 리튬(lithium), 산소 농도(oxygen concentration), 수세(washing), 소성(calcination), 충전(charge), 방전(discharge)

**C.  DOCUMENTS CONSIDERED TO BE RELEVANT**

| Category* | Citation of document, with indication, where appropriate, of the relevant passages | Relevant to claim No. |
| --- | --- | --- |
| Y | JP 2019-067529 A (SUMITOMO METAL MINING CO., LTD.) 25 April 2019 (2019-04-25)<br>See paragraphs [0065]-[0104] and [0128]-[0130]. | 1-11 |
| Y | KR 10-2019-0106406 A (LG CHEM, LTD.) 18 September 2019 (2019-09-18)<br>See paragraphs [0001], [0034], [0053] and [0074]-[0077]. | 1-11 |
| A | JP 2016-110982 A (HITACHI METALS LTD.) 20 June 2016 (2016-06-20)<br>See claims 1-8. | 1-11 |
| A | JP 2018-142402 A (SUMITOMO METAL MINING CO., LTD.) 13 September 2018 (2018-09-13)<br>See paragraphs [0050]-[0059]. | 1-11 |
| A | JP 2012-043716 A (SUMITOMO METAL MINING CO., LTD.) 01 March 2012 (2012-03-01)<br>See paragraphs [0113]-[0133]. | 1-11 |

☐ Further documents are listed in the continuation of Box C.  ☑ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **27 February 2023** | **28 February 2023** |

| Name and mailing address of the ISA/KR | Authorized officer |
| --- | --- |
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

## INTERNATIONAL SEARCH REPORT
### Information on patent family members

International application No.

**PCT/KR2022/018741**

| Patent document cited in search report | | | Publication date (day/month/year) | Patent family member(s) | | | Publication date (day/month/year) |
|---|---|---|---|---|---|---|---|
| JP | 2019-067529 | A | 25 April 2019 | CN | 111466047 | A | 28 July 2020 |
| | | | | EP | 3690999 | A1 | 05 August 2020 |
| | | | | JP | 6996198 | B2 | 17 January 2022 |
| | | | | KR | 10-2020-0058420 | A | 27 May 2020 |
| | | | | US | 2020-0259177 | A1 | 13 August 2020 |
| | | | | WO | 2019-065566 | A1 | 04 April 2019 |
| KR | 10-2019-0106406 | A | 18 September 2019 | CN | 111032575 | A | 17 April 2020 |
| | | | | EP | 3653582 | A1 | 20 May 2020 |
| | | | | JP | 2020-529715 | A | 08 October 2020 |
| | | | | JP | 7031938 | B2 | 08 March 2022 |
| | | | | KR | 10-2231062 | B1 | 23 March 2021 |
| | | | | PL | 3653582 | T3 | 10 January 2022 |
| | | | | US | 11482702 | B2 | 25 October 2022 |
| | | | | US | 2020-0227743 | A1 | 16 July 2020 |
| | | | | WO | 2019-172568 | A1 | 12 September 2019 |
| JP | 2016-110982 | A | 20 June 2016 | JP | 6485232 | B2 | 20 March 2019 |
| | | | | KR | 10-1852792 | B1 | 30 April 2018 |
| | | | | KR | 10-2016-0063982 | A | 07 June 2016 |
| | | | | US | 2016-0156020 | A1 | 02 June 2016 |
| JP | 2018-142402 | A | 13 September 2018 | JP | 7047251 | B2 | 05 April 2022 |
| JP | 2012-043716 | A | 01 March 2012 | JP | 5499992 | B2 | 21 May 2014 |

Form PCT/ISA/210 (patent family annex) (July 2022)

**EP 4 282 829 A1**

**REFERENCES CITED IN THE DESCRIPTION**

**Patent documents cited in the description**

- KR 1020210163379
- JP 2021012807 A